# EUROPEAN PATENT SPECIFICATION

(11) **EP 1 950 537 B1**
(45) Date of publication and mention of the grant of the patent: **20.09.2017**
(21) Application number: 06791212.1
(22) Date of filing: 08.10.2006
(51) Int. Cl.: G01F 23/26, B22D 2/00

(54) **A MOLTEN STEEL LEVEL DETECTING APPARATUS UTILIZING ELECTROMAGNETIC COILS**
SCHMELZSTAHL-PEGELDETEKTIONSVORRICHTUNG MIT ELEKTROMAGNETISCHEN SPULEN
APPAREIL DE DETECTION DE NIVEAU D'ACIER EN FUSION UTILISANT DES BOBINES ELECTROMAGNETIQUES

(30) Priority: 10.10.2005 CN 200510113914
(43) Date of publication of application: 30.07.2008
(73) Proprietor: Tian, Zhiheng, Hunan province 421001 (CN)
(72) Inventor: TIAN, Zhiheng, Hu'nan 421001 (CN)
(74) Representative: Manitz Finsterwald Patentanwälte PartmbB
(86) International application number: PCT/CN2006/002630
(87) International publication number: WO 2007/041944

(56) References cited:
- EP-A- 0 312 799
- CN-Y- 2 318 619
- CN-Y- 2 318 619
- CS-A3- 8 802 091
- DE-A1- 3 432 987
- GB-A- 1 320 876
- GB-A- 1 585 496
- JP-A- 04 309 445
- JP-A- 11 248 517
- US-A- 4 144 756
- US-A- 4 279 149
- US-A- 4 887 798
- US-A- 4 893 507
- US-A- 5 864 229

## Description

### TECHNICAL FIELD

The present invention generally belongs to a liquid level detecting field, and especially relates to a molten steel level detecting apparatus in a mould of conticaster.

### BACKGROUND ART

Using an electromagnetic coil to detect the molten steel level in a mould of conticaster has an advantage of not using a radiation source. This technology includes two types according to its mounting manner: an eddy current type, wherein a sensor is provided at the nozzle of the copper duct of the mould, such as the disclosure made by DE3432987A1; and an electromagnetic type, wherein a sensor is provided on the top of the copper duct of the mould or on the upper flange of the mould, such as the disclosure made by CZ278413B6.

In US4144756, a system for electromagnetically measuring the level of molten metal contained in a furnace discloses that a transmitter coil (1) and two receiver coils (2, 3) are arranged coaxially. In particular, the coils are arranged after each other or within each other seen in the axial direction, at least partially outside each other (for instance two coils connected in opposition and seen in the axial direction laying after each other inside or outside a third coil) or substantially in one and the same plane (for instance spirally within each other).

In US4887798, a device for detecting slag flowing with a stream of molten metal discloses that the reference coil (14), sending coil (11) and measurement coil (12) are coaxially arranged after each other.

In GB1585496, a coil arrangement for electromagnetic measurements discloses that the transmitter coil formed by inner conductor (5) and the two outer receiver coils formed by tubular sheath (6) are concentrically arranged into an integer in a way that one is positioned outside of another. And then the integer is wound to form an integrated circular-cylindrical coil unit (3).

Some sensors known from GB1320876 and US4893507 have a receiving coil and a transmitting coil whose axes are not parallel with each other, but these sensors do not have a bucking coil.

Disadvantages of the prior art lie in that a transmitting coil and a receiving coil are separated spatially and have large volumes, low sensitivity and narrow detecting range. Specifically, the transmitting coil and the receiving coil in some current sensors (for example, the sensors in US4144756, US4887798, GB158 5496, and CN2318619Y) using an electromagnetic coil to detect the molten steel level in the mould of conticaster are arranged coaxially, and they are spaced apart from each other at a certain distance in order to decrease the background signals generated in the receiving coil by the excitation current in the transmitting coil. However, this still renders that the background signals are far stronger than the useful signals which indicate the liquid level and are generated by the eddy current in the receiving coil, wherein the eddy current is generated in the molten steel by the excitation current in the transmitting coil, and thus the sensitivity and the detecting range (which is generally within 150mm) are limited. In order to reduce the background signals generated in the receiving coil by the transmitting coil, sometimes the transmitting coil is made to be very long, and two receiving coils are provided at two ends of the transmitting coil, respectively, while this increases the volume of the sensor (the lengths of some sensors are up to 700mm), and also, insensitive dead region appears at the high liquid level end close to the sensor and no notable improvements are made to the detecting range.

### SUMMARY OF THE INVENTION

The present invention aims to provide a molten steel level detecting apparatus in a mould of conticaster, and the sensor in the detecting apparatus can be installed at the nozzle of the copper duct of the mould, or installed on the upper flange of the mould, or installed on the top of the nozzle of the copper duct of the mould, thus providing a molten steel level detecting apparatus in a mould of conticaster with a compact structure, high sensitivity and wide detecting range.

In order to realize the above object, the present invention provides a molten steel level detecting apparatus in a mould of conticaster, as defined in the patent claims. The molten steel level detecting apparatus in a mould of conticaster according to the present invention achieves the following advantageous effects: (1) in the present invention, only one transmitting coil, one receiving coil and one bucking coil in the sensor are embedded in each other, thus rendering a compact structure of the sensor; (2) in the present invention, the receiving coil and the transmitting coil in the sensor are perpendicular to each other in the axis, which greatly reduces the background signals generated in the receiving coil by the excitation current of the transmitting coil, thus increasing the circle number of the receiving coil and improving the sensitivity and the detecting range of the liquid level detection; and (3) in the present invention, the bucking coil and the transmitting coil are arranged coaxially, so the background signals generated in the bucking coil of a small circle number by the excitation current in the transmitting coil can offset the background signals generated in the receiving coil of a large circle number, and thus useful signals generated in the receiving coil by the eddy current in the molten steel are generally kept, thereby improving the sensitivity and the detecting range (the detecting range of a slab mould is 300mm) of the liquid level detecting apparatus, but also ensuring the stability of the liquid level detecting apparatus via a difference method.

### BRIEF DESCRIPTION OF THE ACCOMPANYING DRAWINGS

Preferred embodiments of the present invention are described hereinafter in an illustrative manner with reference to the accompanying drawings, wherein:
Figure 1 is a schematic view of the sensor in the molten steel level detecting apparatus according to the first embodiment of the present invention, wherein the sensor is installed on the upper flange of a billet mould; and
Figure 2 is a schematic view of the sensor in the molten steel level detecting apparatus according to the second embodiment of the present invention, wherein the sensor is installed at the nozzle of the copper duct of a slab mould.

### DETAILED DESCRIPTION OF EMBODIMENTS

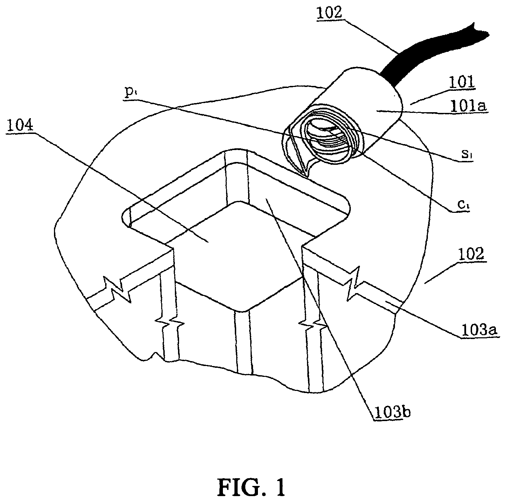

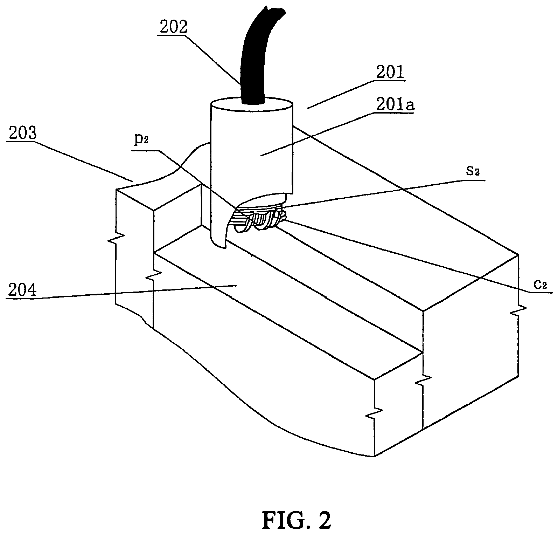

The molten steel level detecting apparatus in a mould of conticaster according to the present invention comprises a sensor, a signal wire and a signal processor, wherein there is one transmitting coil, one receiving coil and one bucking coil in the sensor, and said three coils are embedded in each other. The structure of the present invention will be described in detail hereinafter with reference to figure 1 and figure 2.

The first embodiment of the present invention is shown in figure 1. The cylindrical sensor **101** is installed on the upper flange **103a** of the billet mould **103,** and both the bucking coil **c1** and the transmitting coil **p1** of a small circle number in the housing **101a** (partial section) of the sensor **101** are wound coaxially, and this is the geometric condition for the coupling coefficient of the electromagnetic mutual induction between the two coils to be relatively large. The receiving coil **s1** of a large circle number is provided over one end of the coaxial transmitting coil **p1** and the bucking coil **c1** close to the copper duct **103b,** and the three coils are embedded in each other. The receiving coil **s1** and the transmitting coil **p1** are perpendicular to each other in the axis, and this is the geometric arrangement for the coupling coefficient of the electromagnetic mutual induction between the two coils to be relatively small. Such arrangement renders the coupling coefficient of the electromagnetic mutual induction between the transmitting coil **p1** and the receiving coil **s1** far less than the coupling coefficient between the transmitting coil **p1** and the bucking coil **c1** (the former may be hundreds of times less than the latter), so difference processing may be conducted using the signal of the bucking coil **c1** of a small circle number and the signal of receiving coil **s1** of a large circle number to offset the background signals generated in the receiving coil **s1** by the transmitting coil **p1**, thus improving the stability of the detecting apparatus without decreasing the sensitivity of the receiving coil in detecting the molten steel level **104.** In the present embodiment, the axis of the receiving coil is a horizontal direction which is perpendicular to the inner surface of the copper duct **103b** at the sensor **101** side and is most sensitive to the eddy current in the molten steel, the axis of the bucking coil **c1** is the second most sensitive perpendicular direction, and this helps to maintain the sensitivity of the receiving coil **s1** to liquid level detection within the difference signals of the two coils. The sensor **101** is connected with a signal processor (not shown) via the cable **102.** The signal processor provides the AC to the transmitting coil **p1** of the sensor **101,** processes the difference signals of the receiving coil **s1** and the bucking coil **c1,** provides the height value of the molten steel level **104** in the mould 103 of the conticaster, and provides a control signal for keeping the molten steel level 104 stable.

The second embodiment of the present invention is shown in figure 2. The cylindrical sensor **201** is installed at the nozzle of the copper duct of the slab mould **203,** and both the bucking coil **c2** and the transmitting coil **p2** of a small circle number in the housing **201a** (partial section) of the sensor **201** are wound coaxially, and the receiving coil **s2** (partial section) of a large circle number is provided outside of the coaxial transmitting coil **p2** and the bucking coil **c2,** and the three coils are embedded in each other. The receiving coil **s2** and the transmitting coil **p2** are concentric and are perpendicular to each other in the axis, and this is the orientation arrangement for the coupling coefficient of the electromagnetic mutual induction between the two coils to be the smallest. The axis of the receiving coil **s2** is a direction which is perpendicular to the molten steel level **204** and is most sensitive to the eddy current in the molten steel in such a mounting manner, the axis of the bucking coil **c2** is the second most sensitive direction parallel to the molten steel level **204,** and such arrangement fully maintains the sensitivity of the receiving coil **s2** in detecting the molten steel level **204** while using the background signals of the bucking coil **c2** of a small circle number to offset the background signals of the receiving coil **s2** of a large circle number. The sensor **201** is connected with a signal processor (not shown) via the cable **202.** The signal processor provides the AC to the transmitting coil **p2** of the sensor **201,** processes the difference signals of the receiving coil **s2** and the bucking coil **c2,** provides the height value of the molten steel level **204** in the mould **203** of the conticaster, and provides a control signal for keeping the molten steel level **204** stable.

### INDUSTRIAL APPLICABILITY

The molten steel level detecting apparatus in a mould of conticaster according to the present invention comprises a sensor, a signal wire and a signal processor, wherein there is one transmitting coil, one receiving coil and one bucking coil in the sensor, and said three coils are embedded in each other. The sensor according to the present invention can be installed at the nozzle of the copper duct of the mould, or on the upper flange of the mould, or on the top of the copper duct of the mould. The sensor of the liquid level detecting apparatus according to the present invention is of compact structure, high sensitivity and wide detecting range and can be used for detecting and controlling the molten steel level in slab and billet mould.

## Claims

1. A molten steel level detecting apparatus for a mould of a conticaster, comprising a sensor (101; 201), a signal wire and a signal processor, wherein there is one transmitting coil (p1; p2), one receiving coil (s1; s2) and one bucking coil (c1; c2) in the sensor (101; 201), said three coils are embedded in each other, the bucking coil (c1; c2) and the transmitting coil (p1; p2) are arranged coaxially, **characterized in that** the receiving coil (s1; s2) is provided outside the coaxially arranged transmitting coil (p1; p2) and bucking coil (c1; c2), and **in that** the axes of the receiving coil (s1; s2) and the transmitting coil (p1; p2) are perpendicular to each other.

2. The apparatus according to claim 1, **characterized in that** the sensor (201) is installed at the nozzle of the copper duct of the mould (203).

3. The apparatus according to claim 2, **characterized in that** the axis of the receiving coil (s2) is perpendicular to the molten steel level (204), the axis of the bucking coil (c2) is parallel to the molten steel level (204).

4. The apparatus according to claim 1, **characterized in that** the sensor (101) is installed on the upper flange (103a) of the mould (103).

5. The apparatus according to claim 4, **characterized in that** the axis of the receiving coil (s1) is in horizontal direction which is perpendicular to the inner surface of the copper duct (103b) at the sensor (101) side, the axis of the bucking coil (c1) is perpendicular direction.

6. The apparatus according to claim 1, **characterized in that** the sensor (101) is installed on the top of the copper duct of the mould (103).

7. The apparatus according to any one of the preceding claims, **characterized in that** the circle number of the receiving coil (s1; s2) is larger than the circle number of the bucking coil (c1; c2).

## Patentansprüche

1. Vorrichtung zum Detektieren eines Niveaus von geschmolzenem Stahl für eine Form einer Stranggusseinrichtung, umfassend:
einen Sensor (101; 201), einen Signaldraht und einen Signalprozessor, wobei eine Sendespule (p1; p2), eine Empfangsspule (s1; s2) und eine Kompensationsspule (c1; c2) in dem Sensor (101; 201) vorgesehen sind, wobei die drei Spulen ineinander eingebettet sind, wobei die Kompensationsspule (c1; c2) und die Sendespule (p1; p2) koaxial angeordnet sind, **dadurch gekennzeichnet, dass** die Empfangsspule (s1; s2) außerhalb der koaxial angeordneten Sendespule (p1; p2) und der Kompensationsspule (c1; c2) vorgesehen ist, und dass die Achsen der Empfangsspule (s1; s2) und der Sendespule (p1; p2) rechtwinklig zueinander liegen.

2. Vorrichtung nach Anspruch 1, **dadurch gekennzeichnet, dass** der Sensor (201) an der Düse des Kupferrohres der Form (203) installiert ist.

3. Vorrichtung nach Anspruch 2, **dadurch gekennzeichnet, dass** die Achse der Empfangsspule (s2) rechtwinklig zu dem Niveau (204) von geschmolzenem Stahl ist, wobei die Achse der Kompensationsspule (c2) parallel zu dem Niveau (204) von geschmolzenem Stahl liegt.

4. Vorrichtung nach Anspruch 1, **dadurch gekennzeichnet, dass** der Sensor (101) an dem oberen Flansch (103A) der Form (103) installiert ist.

5. Vorrichtung nach Anspruch 4, **dadurch gekennzeichnet, dass** die Achse der Empfangsspule (s1) in horizontaler Richtung liegt, die rechtwinklig zu der Innenfläche des Kupferrohres (103B) an der Seite des Sensors (101) ist, wobei die Achse der Kompensationsspule (c1) in rechtwinklige Richtung vorliegt.

6. Vorrichtung nach Anspruch 1, **dadurch gekennzeichnet, dass** der Sensor (101) an dem oberen Bereich des Kupferrohres der Form (103) installiert ist.

7. Vorrichtung nach einem der vorhergehenden Ansprüche, **dadurch gekennzeichnet, dass** die Kreiszahl der Empfangsspule (s1; s2) größer als die Kreiszahl der Kompensationsspule (c1; c2) ist.

## Revendications

1. Appareil de détection de niveau d'acier en fusion pour un moule d'un appareil de coulée continue dit "conticaster", comprenant :
un capteur (101 ; 201), un fil de signalisation et un processeur de signaux, dans lequel il est prévu une bobine d'émission (p1 ; p2), une bobine de réception (s1 ; s2) et une bobine auxiliaire (c1 ; c2) dans le capteur (101 ; 201), lesdites trois bobines sont noyées les unes dans les autres, la bobine auxiliaire (c1 ; c2) et la bobine d'émission (p1 ; p2) sont agencées coaxialement,
**caractérisé en ce que** la bobine de réception (s1 ; s2) est prévue à l'extérieur de la bobine d'émission (p1 ; p2) et de la bobine auxiliaire (c1 ; c2) agencées coaxialement, et **en ce que** les axes de la bobine de réception (s1 ; s2) et de la bobine d'émission (p1 ; p2) sont perpendiculaires l'un à l'autre.

2. Appareil selon la revendication 1, **caractérisé en ce que** le capteur (201) est agencé au niveau de la buse du conduit de cuivre du moule (203).

3. Appareil selon la revendication 2, **caractérisé en ce que** l'axe de la bobine de réception (s2) est perpendiculaire au niveau d'acier en fusion (204), l'axe de la bobine auxiliaire (c2) parallèle au niveau d'acier en fusion (204).

4. Appareil selon la revendication 1, **caractérisé en ce que** le capteur (101) est agencé sur la bride supérieure (103a) du moule (103).

5. Appareil selon la revendication 4, **caractérisé en ce que** l'axe de la bobine de réception (s1) est en direction horizontale qui est perpendiculaire à la surface intérieure du conduit en cuivre (103b) sur le côté du capteur (101), et l'axe de la bobine auxiliaire (c1) est en direction perpendiculaire

6. Appareil selon la revendication 1, **caractérisé en ce que** le capteur (101) est installé sur le sommet du conduit en cuivre du moule (103).

7. Appareil selon l'une quelconque des revendications précédentes, **caractérisé en ce que** le nombre de spires de la bobine de réception (s1 ; s2) est plus grand que le nombre de spires de la bobine auxiliaire (c1 ; c2).
